# EUROPEAN PATENT APPLICATION

(11) **EP 0 999 489 A2**
(43) Date of publication of application: **10.05.2000**
(21) Application number: 99203634.3
(22) Date of filing: 04.11.1999
(51) Int. Cl.: G06F 1/00

(54) **Method and system for evaluating information security**

(30) Priority: 06.11.1998 US 107464 P; 01.11.1999 US 430871
(71) Applicant: CITIBANK, N.A., New York, New York 10043 (US)
(72) Inventor: Teller-Kanzler, Jeri, Edison, New Jersey 08820 (US); Dunbar, Thomas, Colonia, New Jersey 07067 (US); Katz, Stephen, West Hills, New York 11747 (US)
(74) Representative: Hynell, Magnus

(57) **Abstract**

A method and system for evaluating information security and developing an effective information security infrastructure for an entity makes use of an information security evaluation model having, for example, five levels with varying characteristics which explain where the entity stands with regard to threats and vulnerabilities to its information security at any point in time. The evaluation can be performed manually or automatically by a computer program running, on a computer, such as a personal computer and includes, for example, identifying one or more information resources of the entity, receiving information about one or more information security characteristics for the identified resource, categorizing the information security characteristic or characteristics according to a pre-defined hierarchy of risk levels, and assessing a degree of business risk for the entity based on the categorization.

## Description

### CROSS REFERENCE TO RELATED APPLICATIONS

This application claims the benefit of U.S. Provisional Application No. 60/107,464 filed November 6, 1998.

### FIELD OF THE INVENTION

The present invention relates generally to the field of evaluating information security, and, in particular, to a method and system for evaluating and developing an effective information security infrastructure.

### BACKGROUND OF THE INVENTION

Organizations of all sizes, for example, small businesses, as well as large businesses, are currently at varying levels of security with respect to information systems, such as their computer systems and networks, which present varying levels of business risk in their daily operations. Generally, such organizations have no effective way to determine whether they are information security astute and whether they have the proper programs and services in place to be considered astute regarding the security of their information. Further, even if they have some systems in place to deal with incidents which may compromise the security of their information, they have no effective way to guarantee whether they are in a highly alert state of readiness or simply a mediocre state of readiness if such an incident occurs. Nor do they have an effective way to evaluate whether particular programs which may be in place are in place at the optimum point to deal with such incidents.

Many of such entities operate under the mistaken assumption that their information is secure or, for example, that an intruder or hacker would not be motivated to try to gain access to their information systems. Likewise, many such entities mistakenly assume that their employees are aware of and in compliance with the entities' requirements for maintaining and working in a secured environment relative to the entities' information systems. Such entities operate under the assumption, but without any assurance, that information relative to their products and services is confidential and will remain confidential. They assume that their level of risk for a security breach is low, when indeed the level of risk of such a breach may be very high. Such unwarranted assumptions themselves create an additional level of business risk.

Various attempts have been made to address the problems associated with evaluating and developing effective information security infrastructures at different levels of businesses with different levels of sophistication using various levels of technology. Some of such attempts work in some parts of business, and others work on information technologies only. Some are paper-based. However, none have been particularly successful or effective in encompassing, defining, and classifying vulnerabilities, risk, and threats and providing information security infrastructure solutions at all levels of business and technology.

There is a current need to provide a relatively simple and efficient method and system for evaluating existing information security and for developing an effective information security infrastructure.

### SUMMARY OF THE INVENTION

It is a feature and advantage of the present invention to provide a method and system for evaluating and developing an effective information security infrastructure which defines a set of controls for assessing and compensating for vulnerabilities in each organizational component, such as technology and business processes.

It is a further feature and advantage of the present invention to provide a method and system for evaluating and developing an information security infrastructure which furnishes a means for defining and classifying the degree of risk associated with information assets, where the risk is defined as the economic value, worth or exposure or the reputational impact of an information asset.

It is another feature and advantage of the present invention to provide a method and system for evaluating and developing an information security infrastructure which assists an organization in determining the nature of threats or vulnerability to the organization's information systems.

It is an additional feature and advantage of the present invention to provide a method and system for evaluating and developing an information security infrastructure which affords tools for assessing and analyzing the impact of threats to an organization's information systems and recommends solutions to deal with such threats.

To achieve the stated and other features, advantages, and objects, an embodiment of the present invention method and system for evaluating information security for an entity which makes use of an information security evaluation model grid having, for example, five different levels with varying characteristics which explain where the entity stands with regard to information security risks at any given time. The method and system for an embodiment of the present invention includes, for example, identifying one or more information security resources related to an information security area of the entity, such as an organizational environment area, a business commitment area, a policy and standards area, and an information security programs and service area of the entity. The identification can be performed either manually or can be received on a computer program running on a computer, such as a personal computer.

In the method and system for an embodiment of the present invention, the information resources related to the organizational environment area of the entity relates, for example, to one or more corporate structure resources and responsibility and accountability resources. The business commitment area of the entity relates, for example, to one or more management resources, funding resources, incident management resources, awareness and education resources, operations resources, information ownership resources, and information classification resources. The policy and standards area of the entity relates, for example, to one or more existence and maintenance resources and enforcement and measurement resources. The information security programs and services area of the entity relates, for example, to one or more prevention resources, detection resources, and verification resources.

In the method and system for an embodiment of the present invention, information is received about one or more information security characteristics for the identified information security resource which is indicative of a pre-defined risk level for the information security of the entity and which also indicates a pre-defined level of readiness of the entity to deal with a risk to the information security of the entity. The pre-defined levels of readiness include, for example, a complacent level of readiness, an acknowledgment level of readiness, an integration level of readiness, a common practice level of readiness, and a continuous improvement level of readiness. Likewise, the information can be gathered and received manually or can be received by entering on the computer program running on a computer, such as a personal computer.

In the method and system for an embodiment of the present invention, the complacent level of readiness is characterized by a propensity of the entity to resignation to the current information security environment of the entity. The acknowledgment level of readiness is characterized by a propensity of the entity to acknowledgment of a need to improve the information security of the entity. The integration level of readiness is characterized by a propensity of the entity to integrate existing information security programs and services of the entity. The common practice level of readiness is characterized by a propensity of the entity to customarily practice information security procedures for the entity. The continuous improvement level of readiness is characterized by a propensity of the entity to continuously improve information security practices for the entity.

In the method and system for an embodiment of the present invention, the information security characteristic or characteristics are categorized according to a pre-defined hierarchy of the information security risk levels that are associated with various information security characteristics and which are also indicative of the pre-defined levels of readiness of the entity to deal with a risk to the information security of the entity. Again, the categorization can be performed manually or automatically by the computer program running on the computer, such as a personal computer. Further, the categorized information security characteristic or characteristics can be weighted either manually or automatically by the computer program and recategorized manually or by the computer program.

In the method and system for an embodiment of the present invention, the categorized or weighted and recategorized information security characteristic or characteristics are used as the basis for an assessment of the degree of business risk for the entity. The assessment can be performed either manually or automatically by the computer program. Another aspect for an embodiment of the present invention includes, for example, selection of the entity for which to evaluate the information security, for example, from a unit level entity, a business level entity, or an organization level entity. A further aspect for an embodiment of the present invention includes, for example, assigning an evaluation team for the selected entity. An additional aspect for an embodiment of the present invention includes, for example, generating a recommendation for a security improvement based at least in part on the assessed degree of business risk and at least in part on the cost of the security improvement.

### BRIEF DESCRIPTION OF THE ATTACHMENTS

Figs. 1 through 5 show a grid which illustrates an example of five levels of information security for the information security evaluation model for an embodiment of the present invention; and
Fig. 6 is a flow chart which illustrates and example of the process of evaluating the information security infrastructure for an entity using the information security evaluation model grid of Figs. 1 through 5 for an embodiment of the present invention.

### DETAILED DESCRIPTION OF THE INVENTION

Referring now in detail to an embodiment of the present invention, an example of which is illustrated in the accompanying drawings, the system and method for an embodiment of the present invention makes use of an information security evaluation model having, for example, five different levels with varying characteristics which explain where an organization is with regard to threats and vulnerabilities to its information security at any given point in time. The five levels of the ISEM correspond generally to how ready an organization is to deal with an incident, such as an intrusion into the organization's information system by a hacker.

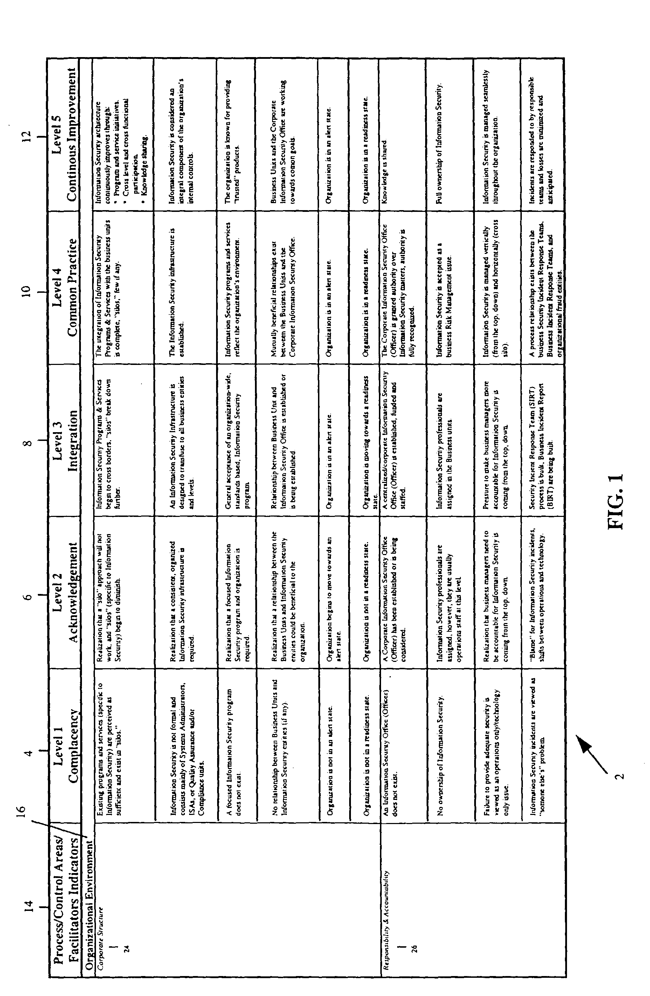

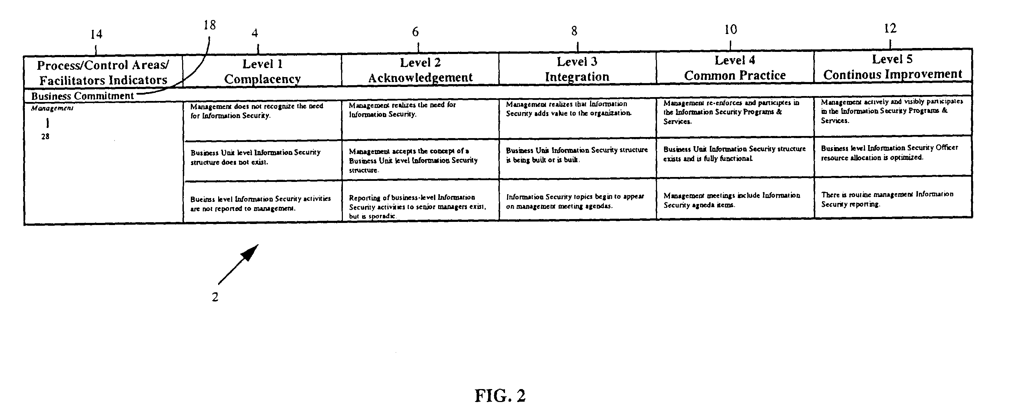

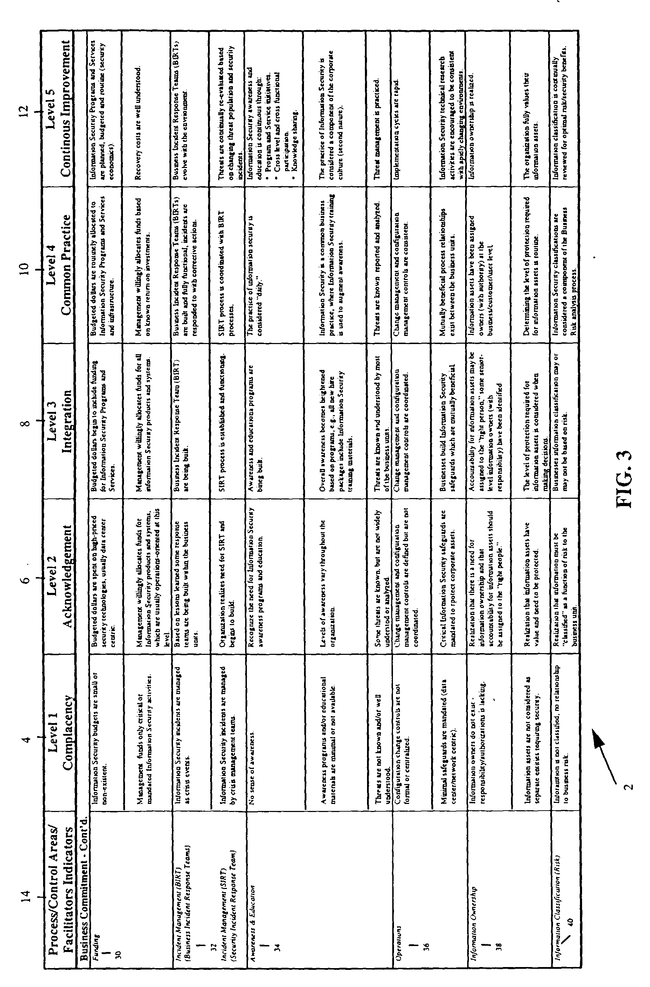

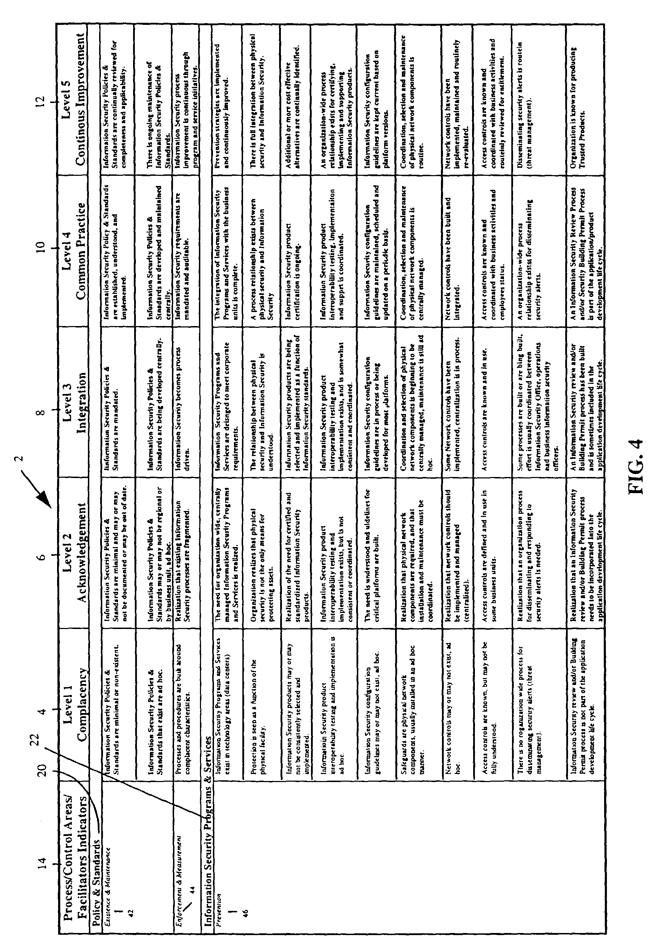

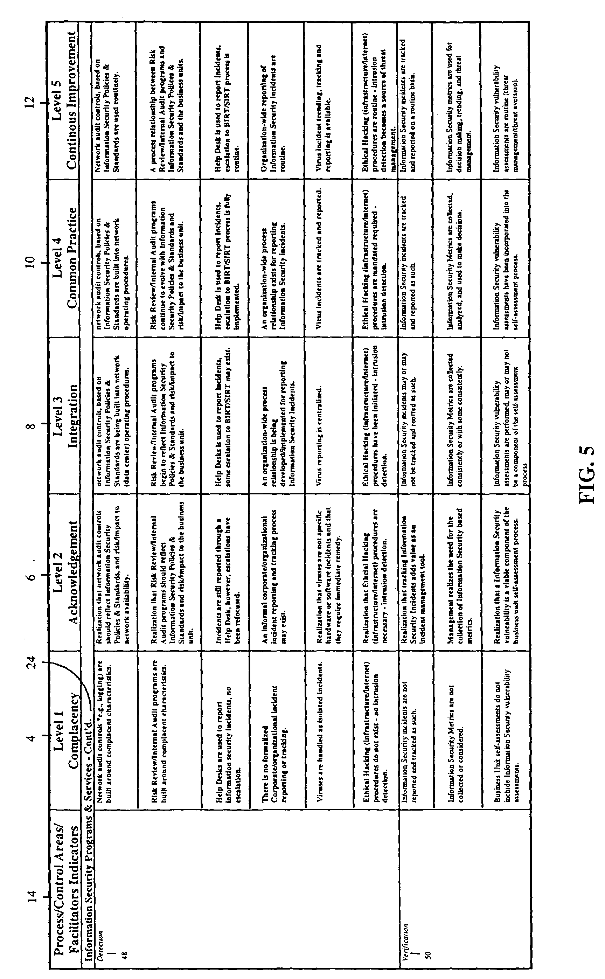

Figs. 1- 5 show a table or grid 2 which illustrates an example of five levels of information security (IS) for the information security evaluation model (ISEM) for an embodiment of the present invention. Referring to Figs. 1 - 5, the first level 4 of the ISEM grid 2 is complacency, which defines an organization that is contented or resigned to its current environment. The first level 4 characterizes an organization, for example, that is contented, satisfied, or resigned to the current environment. At the first level 4, existing circumstances are accepted with an attitude of "If it's not broken, don't fix it."

In an embodiment of the present invention, complacency at the first level 4 of the ISEM grid 2 is characterized, for example, in that existing programs and services are perceived as sufficient. Generally, system availability requirements are understood, and failure to provide adequate security is viewed as an 'operations only' issue. Some threats are known, but are not analyzed or understood. Protection is seen as a function of the physical facility, and safeguards are physical network components that are usually installed in an ad hoc manner. Information assets are not considered as separate entities requiring security, and IS is not formal and consists mainly of systems administrators, information systems administrators, or quality assurance and/or compliance units. The requirement for passwords/user identifications may or may not be a commonplace occurrence, and directory set ups of "read," "write," and "share" are known but may not be fully understood. A help desk is used to report incidents with no escalation, and incidents may or may not be resolved. Also, at the first level 4, IS incidents are viewed as "someone else's problem," and IS policies and standards are minimal, and may or may not be documented.

The consequences to an organization of complacency at the first level 4 of the ISEM grid 2 for an embodiment of the present invention include, for example, no ownership of information or sense of awareness of IS. The organization is not in a state of alertness or readiness, and IS budgets are typically small or non-existent. Information owners do not exist, and responsibility and/or authorization is lacking. Information is not classified, and there is no relationship to business risk. Security incidents are not reported and tracked as such and are managed as crisis events. In addition, at the first level 4, audit controls and process and procedures are built around complacent characteristics.

In an embodiment of the present invention, with complacency at the first level 4 of the ISEM grid 2 for an embodiment of the present invention, the response of the organization to an IS incident is reactionary. For example, if someone breaks into the organization's network or server and steals the organization's confidential documentation, a first level 4 or complacent organization initially takes a long time to determine whether such a break-in has indeed occurred. The organization may not be aware of the break-in for an extended period of time. When the organization finally learns of the break-in, it has no mechanism for reporting or responding to the break-in. Such an organization does not usually have any budgeted dollars with which to employ someone to help deal with the break-in, so it has a high impact on the organization. Such a reactionary response to an information security breach is expensive, and usually the organization's management at the first level 4 over-reacts or perhaps becomes panic-stricken.

Referring further to Figs. 1 - 5, the second level 6 of the ISEM grid 2 for an embodiment of the present invention, is acknowledgment, which is represented by an organization whose management acknowledges that perhaps they need to do something to work in a more secure environment for IS. At the second level 6, change and validation of IS requirements is accepted, and management understands risk as it pertains to IS.

In an embodiment of the present invention, at the acknowledgment or second level 6 of the ISEM grid 2, some of the business people within the organization realize that there are risks pertaining to the organization's information security and are willing to allocate money to try to avoid such risks. They are also willing to implement at least some monitoring tools or training of at least some of their employees for the purpose. At the second level 6, they are beginning to become more alert to the fact that an information security breach can happen.

Characteristics of the acknowledgment or second level 6 of the ISEM grid 2 for an embodiment of the present invention include, for example, a realization that a "silo" approach will not work, that a focused IS program and IS organization is required, and that existing IS processes are fragmented. Additional characteristics of acknowledgment at the second level 6 include, for example a realization that information assets must be owned in a concept of "information ownership" and that information must be "classified" as a function of risk to the business unit.

Other characteristics of the acknowledgment or second level 6 of the ISEM grid 2 for an embodiment of the present invention include, for example, that management is willing to allocate funds for IS products and systems, which is usually operations oriented at this level. Management also realizes that IS is needed, and a corporate IS officer has been assigned or is being considered. While IS professionals are assigned, they are usually operations staff at this level. Incidents are still reported through a help desk, but escalations are refocused. IS organizations receive reports of incidents from the help desk as a function of the escalation chain. At the second level 6, some response teams are being built within the business units and the IS organization, and reporting of business level IS activities to senior management exists but is sporadic.

The results for an entity at the acknowledgment or second level 6 of the ISEM grid 2 for an embodiment of the present invention include, for example, that "silos" particular to IS between groups begin to diminish. IS requirements are mandated, but process and programs to manage them are not yet built. Ad hoc requests for IS status is made by management to line managers, pressure to make business managers more accountable for IS comes from the top, down, and IS topics begin to appear on management meeting agendas. In addition, at the second level 6, accountability for information assets may be assigned to a person, and the level or protection required for information assets is considered when making decisions.

Other results for an entity at the acknowledgment or second level 6 of the ISEM grid 2 for an embodiment of the present invention include, for example, that budgeted dollars are spent on high priced security technologies, which are usually data center centric. The blame for incidents, system failures, or availability shifts between operations and information security providers, and attention to incident management increases. Additionally, at the second level 6, end user productivity can be effected by IS safeguards mandated to protect corporate assets, and the organization begins to move towards an alert state, although it is not yet in a readiness state.

Referring still further to Figs. 1- 5, the third level 8 of the ISEM grid 2 for an embodiment of the present invention is integration, in which an organization's management takes any existing programs and services that are already in the organization and integrates them or penetrates them down into all levels of the business so they work in concert together. In an organization at the third level 8, IS requirements across corporate boundaries are accepted, and threats and vulnerabilities are understood, as well as a requirement for cross functionality.

At the integration or third level 8 of the ISEM grid 8, for an embodiment of the present invention, there is a state of readiness, because information security requirements are integrated between the levels and the businesses, and people know what to do and how to respond to an information security breach. For example, when an incident occurs, they know not to publicize it, because publicity can cause damage to the organization's reputation. At the third level 8, they know to report the incident to the appropriate security officer, which has been designated beforehand.

Characteristics of an organization at the integration or third level 8 of the ISEM grid 2 for an embodiment of the present invention include, for example, that management realizes that IS adds value to the organization, and there is a general acceptance of an organization-wide, standards based, IS infrastructure. An IS infrastructure is designed to penetrate all business entities and levels, and a centralized corporation IS office or officer is established, funded, and staffed, and granted authority over IS matters. Senior level information owners with responsibility are identified, and information assets are assigned sponsors with authority at the business, customer, and/or user level. At the third level 8, information has been and/or is being classified based on business risk, and an organization-wide process relationship exists for reporting incidents.

Other characteristics of an organization at the integration or third level 8 of the ISEM grid 2 for an embodiment of the present invention include, for example, that organization-wide process relationships exist for responding to incidents, for disseminating security alerts or threat management, and for certifying security products. Virus reporting is centralized, and a security building permit process is part of the application/product development lifecycle. A process relationship exists between the security incident response teams, business incident response teams, and organization fraud entities, and IS vulnerability assessment tools are made available to the business units. At the third level 8, all new hire packages include an IS package and training schedule, IS training programs are available, and IS metrics are collected, analyzed, and used to make decisions.

The results for an entity at the integration or third level 8 of the ISEM grid 2 for an embodiment of the present invention include, for example, that products/applications are delivered with appropriate levels of security, end users can more readily identify reportable incidents, and mutually beneficial process relationships exist between the business units. IS metrics are used for decision making, trending, and threat management, IS becomes process driven, and IS is managed vertically from the top, down and horizontally or cross "silo." IS programs and services are being designed to meet corporate requirements, IS practices are mandated, and accountability for information assets are assigned to the "right people." IS vulnerability assessments are being incorporated in the business unit's self-assessment process, information assets are being classified as a function of risk, and information ownership is omnipresent. The organization at the third level 8 is in an alert state and is moving towards a readiness state.

Referring again to Figs. 1 - 5, the fourth level 10 of the ISEM grid 2 for an embodiment of the present invention is common practice, which means that there has been a culture switch within the organization and that providing IS programs and services is a common practice of the organization. For example, it becomes a common practice for employees to password their workstations, to turn their equipment off at night, to take IS precautions when traveling, to lock away confidential documentation. Off-site storage is provided for confidential documentation. At the third level 10, such IS actions become common practice. Employees think about IS at all times. In an organization at the third level 10, IS requirements reach the business entity level as daily business procedures, IS practices are widespread throughout the corporation, and IS practices become an habitual occurrence.

In an organization at the fourth level 10 of the ISEM grid 2 for an embodiment of the present invention, information security is a common practice. People know what to do and money is budgeted for information security. Information security is a part of building the organization's applications and products. The common practice characteristics of an organization at the fourth level 10 include, for example, that the integration of IS programs and services with the business unit's is complete. Management actively and visibly participates in the IS programs and services, the IS infrastructure is established, IS policy and standards are established, understood, and implemented, and the practice of IS is considered daily.

In an organization at the fourth level 10 of the ISEM grid for an embodiment of the present invention, information classifications are based on business risk analysis, incident reporting is centralized and focused, business incident response teams are built, and a process relationship exists between the business incident response teams and a security incident response team. Virus incidents are tracked and reported, IS metrics are available at the business level, and business level IS officer resource allocation is optimized. At the fourth level 10, IS product certification is ongoing, and management meetings include IS awareness agenda items.

The results for an organization at the common practice or fourth level 10 of the ISEM grid 2 for an embodiment of the present invention include, for example, that IS is a common business practice, and there is consistency in IS products. IS programs and services are interactive, there is routine corporate wide IS reporting, and mutually beneficial relationships exist between the organizational units. There is consistency in corporate IS initiatives, IS programs and services reflect the organization's environment, the organization understands its vulnerabilities, and virus incident trending, tracking, and reporting is available. At the fourth level 10, the organization is in an alert state, as well as a readiness state.

Referring once again to Figs. 1 - 5, the final or fifth level 12 of the ISEM grid 2 for an embodiment of the present invention is continuous improvement, in which an organization for which IS culture has become a common practice, looks continually at technologies for improving the security of information, and works with those technologies to continuously improve the IS environment within the organization. In an organization at the fifth level 12, IS practices are a proven corporate benefit and quality state with a corresponding increase in productivity and value, and IS becomes a part of the brand.

In an embodiment of the present invention, at the continuous improvement or fifth level 12, the organization is in a highly alert state with regard to IS and ready to deal with any incident, such as a hacker. When such an incident occurs, response teams are ready to go into place and resolve the problem. An organization that is at the fifth level 12 continuously monitors the threats to its IS out in the marketplace and is able to evaluate how the threats affect the organization and then make changes based on those threats. Such an organization looks at more cost-effective alternatives than what it currently has in place. The organization frequently re-classifies its information based on various risks. It changes its policies and standards to reflect changes in technology or changes in its classification of information. An organization at the fifth level 12 does such things relatively quickly. Implementation cycles are designated in Web years, which is usually about three months. At the fifth level 12, IS activities are encouraged in the organization.

An organization at the fifth level 12 of the ISEM grid 2 for an embodiment of the present invention has IS programs and services that are planned and routine. IS is something that happens as part of the planning and strategic planning processes of the organization. The products that emanate from an organization that reaches the continuous improvement or fifth level 12 are trusted products, and buyers of such products know the products can be trusted. IS is considered part of the organization and becomes part of the culture of the organization. In an organization at the fifth level 12, IS is something that people within the organization deal with every day, and knowledge that the organization gains is shared throughout the organization.

In an organization at the fifth level 12 of the ISEM grid 2 for an embodiment of the present invention, IS program and service initiatives are at a much higher level and function across organizational lines. In the event of an IS incident, the response is quick, and everyone knows what to do, which usually results in savings of money to the organization. There is a mechanism in place for reporting incidents back to management. An organization at the fifth level 12 is constantly alert to information security risks, and the organization is ready to handle such risks, which minimizes losses.

Characteristics of an organization at the continuous improvement or fifth level 12 for an embodiment of the present invention include, for example, continual reevaluation of threats based on changing threat population and security incidents, and additional or more cost effective alternatives are continually identified. Information classification is continually reviewed for optimal risk/security benefits, IS policies and standards are continually reviewed for completeness and applicability, and implementation cycles are in Web years. IS technical research activities are encouraged to be consistent with rapidly changing environments, IS programs and services are planned, budgeted, and routine for security economics, and the organization is known for providing trusted products. In an organization at the fifth level 12, IS is considered an integral component of the organization's internal controls, the practice of IS is considered a component of the corporate culture and is second nature, and knowledge is shared.

The results of the continuous improvement or fifth level 12 of the ISEM grid 2 for an embodiment of the present invention include, for example, that IS process improvement is continuous through program and service initiatives, cross level and cross functional participation, and the sharing of knowledge. Incidents are responded to with corrective actions, feedback to management is consistent, prevention strategies are implemented and continuously improved. Recovery costs are contained, and losses are minimized and anticipated. An organization at the fifth level 12 is in alert state, as well as a readiness state.

Referring still again to Figs. 1 - 5, the ISEM for an embodiment of the present invention makes use of the grid 2, which includes the five levels of the ISEM, as well as associated process, control and facilitator indicator areas 14. The process, control, and facilitator indicator areas 14 include, for example, organizational environment 16, business commitment 18, policy and standards 20, and IS programs and services 22. The process and control area facilitators and indicators 14, such as organizational environment 16, are the features that determine the results, i.e., make each thing happen, or indicate who determines the status or where each characteristic is at any particular time.

In an embodiment of the present invention, the process, control, and facilitator indicator areas 14 of the ISEM grid 2 are areas within an organization that have some type of responsibility for information security. Within each process, control and facilitator indicator area 14 there is a definition. For example, organizational environment 16 relates to corporate structure 24 and responsibility and accountability 26. Business commitment 18 relates to management 28, funding 30, incident management 32, awareness and education 34, operations 36, information ownership 38, and information classification 40. Policy and standards 20 relates to maintenance 42 and enforcement and measurement 44. IS procedures and services 22 relates to prevention 46, detection 48, and verification 50.

Each of the five levels of the ISEM grid 2 for an embodiment of the present invention is documented and within each cell of the grid 2. For example, corporate structure 24 at the first level 4 addresses existing programs and services that are perceived as sufficient and exist in silos, information security that is informal and consists mainly of systems administrators, the absence of a focused IS program or a relationship between business units and IS entities, and the absence of a readiness or an alert state of IS. For another example, responsibility and accountability 26 at the first level 4 addresses the absence of an IS office or officer, the absence of ownership of IS, the view of failure to provide adequate IS as only an operations or technology issue, and the view of IS incidents as someone else's problem.

In an embodiment of the present invention, the ISEM grid 2 for an embodiment of the present invention takes all of the characteristics and puts them into the proper cell for the analysis and evaluation of the IS of an organization and does it for each process area within the organization. The ISEM grid 2 for an embodiment of the present invention can be used with a tool set on a qualitative basis without weighting, but weighting can serve to quantitatively define or refine the process somewhat.

In a weighting aspect of an embodiment of the present invention, the ISEM grid 2 is used to weight and score information security by viewing each characteristic within a cell and weighting it as to its importance in the particular level and computing a score. An organization cannot graduate from one level to the next level until it reaches a certain score. The weighting process is an aspect of the present invention, and the calculation of the level of IS is consistent, regardless of the particular tool set that is used to evaluate the cells or evaluate their levels by using, for example, a decision tree or a cumulative process. A tool set is used by an organization to determine the particular level at which the organization stands. The characteristics within each level of the model can be weighted and the results scored using the tool set to identify the level at which the organization stands.

In an embodiment of the present invention, the resulting score is used by business managers within the organization to make a decision with regard to whether they are satisfied with the particular level at which the organization stands in respect to IS in light of the risk to the business of the organization. If the business managers within the organization find the business risk unacceptable, they can elect to determine, for example, the technology steps necessary to be taken to move to a higher level on the ISEM grid 2 and the costs associated with such steps. If the business risk justifies the costs, appropriate procedures can be implemented to move to a higher level on the ISEM grid 2.

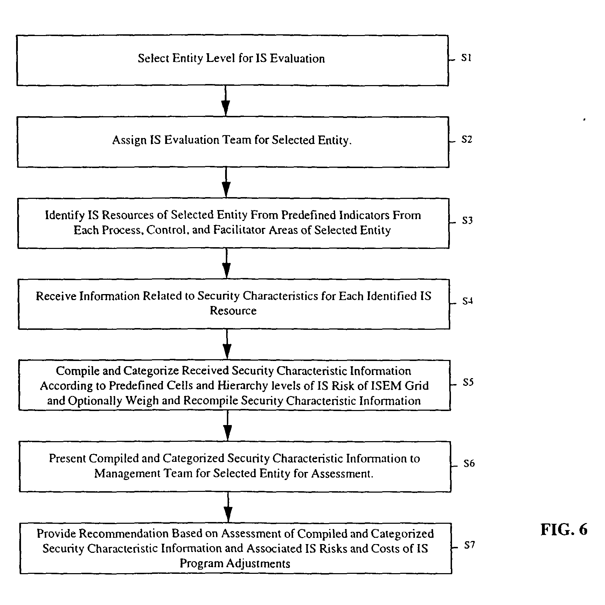

Fig. 6 is a flow chart which illustrates an example of the process of evaluating an entity's IS infrastructure using the ISEM grid 2 for an embodiment of the present invention. Referring to Fig. 6, at S1, a selection is made for the particular entity for which IS to be evaluated. The selected entity can be, for example, a unit level, a business level or the organization level. At S2, an ISEM certified evaluation team is assigned. At S3, the IS resources of the selected entity are identified from pre-defined indicators, for example, from each process, control, and facilitator indicator area of the entity, such as organizational environment 16, business commitment 18, policy and standards 20, and IS programs and services 22.

Referring further to Fig. 6, at S4, information is received that relates to security characteristics, for example, for each identified IS resource. For example, questions concerning the security characteristics of each identified IS resource are considered and answered, which relate to the levels on the ISEM grid 2 and where the entity stands on the ISEM grid 2. For the organization to be, for example, at the first level 4, it must meet certain criteria.

In order to get to the security characteristics, for example, for the first level 4 of the ISEM grid 2 for an embodiment of the present invention, it is necessary to pose and answer questions about the identified IS resources, such as whether existing IS programs are perceived as sufficient, whether IS is informal and consists mainly of systems administrators, whether a focused IS program exists, whether a relationship exists between business units and IS entities, whether an IS office or officer exists, and the like. The questions can be posed in any number of ways to get to the security characteristics, and the yes or no answers to the questions provide the information that determines the level on the ISEM grid 2 at which the entity stands.

Referring again to Fig. 6, at 85, the information about the IS characteristics of the entity is compiled and categorized according to a predefined hierarchy of IS characteristics, such as the five levels of the ISEM grid 2. While the compilation and categorization of the IS characteristics can be performed manually, an aspect of an embodiment of the present invention makes use of a computer software application or program referred to as the ISEM tool set or tool kit running, for example, on a personal computer (PC). The ISEM tool kit is used to perform evaluations by the automated software application by process, control, and facilitator indicator area 14. The ISEM tool kit automatically compiles and categorizes the results for each cell of the ISEM grid 2.

In an additional aspect for an embodiment of the present invention, after posing and answering all of the questions, at S5, the ISEM tool kit optionally performs weighting, recompiles the weighted results, and automatically determines the level within the ISIM grid 2 where the entity stands. The ISEM tool optionally compiles, enters and weights the results. At S6, the compiled and categorized results are presented to a management team for the entity, which assesses the results to determine whether, for example, the entity, is operating at a level on the ISEM grid 2 which meets the entity's IS needs, based on business determined risks. At S7, a recommendation is made by the management team, based on its assessment of the compiled and categorized results according to the ISEM grid 2 and the costs of IS program adjustments, if applicable.

An embodiment of the present invention identifies threats and vulnerabilities or the risk state of an organization's information and enables the organization to develop an effective IS infrastructure. An embodiment of the present invention defines a set of controls for assessing and compensating for vulnerabilities in each organizational component, such as technology, business process, and the like. An embodiment of the present invention also provides a means for defining and classifying the degree of risk associated with information assets, where risk is defined as the economic value or degree of worth of an information asset and/or the economic exposure and/or reputational impact to the organization. Further, an embodiment of the present invention assists the organization in determining the nature of threats and exploiting vulnerabilities, provides tools for impact assessment and analysis, and recommends solutions.

Although the invention has been described with reference to these preferred embodiments, other embodiments can achieve the same results. Various modifications of the present invention will be apparent to one skilled in the art, and the above disclosure is intended to cover all such modifications. Accordingly, the invention is limited only by the following claims.

## Claims

1. A method for evaluating information security for an entity, comprising:
identifying at least one information security resource related to an information security area of the entity selected from a group consisting of an organizational environment area, a business commitment area, a policy and standards area, and an information security programs and services area of the entity;
receiving information about at least one information security characteristic for the identified information security resource;
categorizing the information security characteristic according to a pre-defined hierarchy of information security risk levels associated with information security characteristics; and
assessing a degree of business risk for the entity based on the categorization of the information security characteristic.

2. The method of claim 1, wherein identifying the information security resource further comprises identifying the information security resource from one of a corporate structure resource and a responsibility and accountability resource related to the organizational environment area of the entity.

3. The method of claim 1, wherein identifying the information security resource further comprises identifying the information security resource selected from a group consisting of a management resource, a funding resource, an incident management resource, an awareness and education resource, an operations resource, an information ownership resource, and an information classification resource related to the business commitment area of the entity.

4. The method of claim 1, wherein identifying the information security resource further comprises identifying the information security resource from one of an existence and maintenance resource and an enforcement and measurement resource related to the policy and standards area of the entity.

5. The method of claim 1, wherein identifying the information security resource further comprises identifying the information security resource selected from a group consisting of a prevention resource, a detection resource, and a verification resource related to the information security programs and services area of the entity.

6. The method of claim 1, wherein identifying the information security resource further comprises receiving a selection of the identified information security resource on a computer program.

7. The method of claim 1, wherein receiving the information further comprises receiving the information about the security characteristic for the identified information security resource which is indicative of a pre-defined risk level for the information security of the entity.

8. The method of claim 7, wherein receiving the information indicative of the pre-defined risk level further comprises receiving the information indicative of a pre-defined level of readiness of the entity to deal with a risk to the information security of the entity selected from a group consisting of a complacent level of readiness, an acknowledgment level of readiness, an integration level of readiness, a common practice level of readiness, and a continuous improvement level of readiness of the entity.

9. The method of claim 8, wherein receiving the information indicative of the pre-defined level of readiness further comprises receiving the information indicative of the complacent level of readiness which indicates a propensity of the entity to resignation to a current information security environment of the entity.

10. The method of claim 8, wherein receiving the information indicative of the pre-defined level of readiness further comprises receiving the information indicative of the acknowledgment level of readiness which indicates a propensity of the entity to acknowledgment of a need to improve the information security of the entity.

11. The method of claim 8, wherein receiving the information indicative of the pre-defined level of readiness further comprises receiving the information indicative of the integration level of readiness which indicates a propensity of the entity to integrate existing information security programs and services of the entity.

12. The method of claim 8, wherein receiving the information indicative of the pre-defined level of readiness further comprises receiving the information indicative of the common practice level of readiness which indicates a propensity of the entity to customarily practice information security procedures for the entity.

13. The method of claim 8, wherein receiving the information indicative of the pre-defined level of readiness further comprises receiving the information indicative of the continuous improvement level of readiness indicative of a propensity of the entity to continuously improve information security practices for the entity.

14. The method of claim 1, wherein receiving the information further comprises receiving the information at a computer.

15. The method of claim 1, wherein categorizing the information security characteristic further comprises categorizing the information security characteristic according to a pre-defined risk level for the information security of the entity.

16. The method of claim 15, wherein categorizing the information security characteristic according to the pre-defined risk level further comprises categorizing the information security characteristic according to a pre-defined level of readiness of the entity to deal with a risk to the information security of the entity selected from a group consisting of a complacent level of readiness, an acknowledgment level of readiness, an integration level of readiness, a common practice level of readiness, and a continuous improvement level of readiness.

17. The method of claim 16, wherein categorizing the information security characteristic according to the pre-defined level of readiness further comprises categorizing the information security characteristic according to the complacent level of readiness indicative of a propensity of the entity to resignation to a current information security environment of the entity.

18. The method of claim 16, wherein categorizing the information security characteristic according to the pre-defined level of readiness further comprises categorizing the information security characteristic according to the acknowledgment level of readiness indicative of a propensity of the entity to acknowledge a need to improve the information security of the entity.

19. The method of claim 16, wherein categorizing the information security characteristic according to the pre-defined level of readiness further comprises categorizing the information security characteristic according to the integration degree of readiness indicative of a propensity of the entity to integrate existing information security programs and services of the entity.

20. The method of claim 16, wherein categorizing the information security characteristic according to the pre-defined level of readiness further comprises categorizing the information security characteristic according to the common practice level of readiness indicative of a predisposition of the entity to customarily practice information security procedures for the entity.

21. The method of claim 16, wherein categorizing the information security characteristic according to the pre-defined level of readiness further comprises categorizing the information security characteristic according to the continuous improvement level of readiness indicative of a propensity of the entity to continuously improve information security practices for the entity.

22. The method of claim 1, wherein categorizing the information security characteristic further comprises categorizing the information security characteristic by a computer program.

23. The method of claim 22, wherein categorizing the information security characteristic further comprises weighting the categorized information security characteristic.

24. The method of claim 23. wherein weighting the categorized information security characteristic further comprises automatically weighting the categorized information security characteristic by a computer program.

25. The method of claim 24, wherein weighting the categorized information security characteristic further comprise recategorizing the weighted information security characteristic.

26. The method of claim 25, wherein recategorizing the weighted information security characteristic further comprises automatically recategorizing the weighted information security characteristic by a computer program.

27. The method of claim 1, wherein assessing the degree of business risk further comprises assessing the degree of business risk based on the categorization of the information security characteristic according to a pre-defined risk level for the information security of the entity.

28. The method of claim 27, wherein assessing the business risk based on the categorization of the information security characteristic further comprises assessing the business risk based on the categorization of the information security characteristic according to a predefined level of readiness of the entity to deal with a risk to the information security of the entity selected from a group consisting of a complacent level of readiness, an acknowledgment level of readiness, an integration level of readiness, a common practice level of readiness, and a continuous improvement level of readiness.

29. The method of claim 28, wherein assessing the business risk further comprises assessing the business risk based on the categorization of the information security characteristic according to the complacent level of readiness indicative of a propensity of the entity to resignation to a current information security environment of the entity.

30. The method of claim 28, wherein assessing the business risk further comprises assessing the business risk based on the categorization of the information security characteristic according to the acknowledgment level of readiness indicative of a propensity of the entity to acknowledge a need to improve the information security of the entity.

31. The method of claim 28, wherein assessing the business risk further comprises assessing the business risk based on the categorization of the information security characteristic according to the integration level of readiness indicative of a propensity of the entity to integrate existing information security programs and services of the entity.

32. The method of claim 28, wherein assessing the business risk further comprises assessing the business risk based on the categorization of the information security characteristic according to the common practice level of readiness indicative of a propensity of the entity to customarily practice information security procedures for the entity.

33. The method of claim 28, wherein assessing the business risk further comprises assessing the business risk based on the categorization of the information security characteristic according to the continuous improvement level of readiness indicative of a propensity of the entity to continuously improve information security practices for the entity.

34. The method of claim 1, wherein assessing the business risk further comprises automatically assessing the business risk by a computer program.

35. The method of claim 1, further comprising selecting the entity for which to evaluate the information security.

36. The method of claim 35, wherein selecting the entity further comprises selecting the entity from one of a unit level entity, a business level entity, and an organization level entity.

37. The method of claim 1, further comprises assigning an evaluation team for the selected entity.

38. The method of claim 1, further comprising generating a recommendation for a security improvement related to the information security characteristic based at least in part on the assessed degree of business risk.

39. The method of claim 38, wherein generating the recommendation further comprises generating the recommendation for the security improvement based at least in part on the cost of the security improvement.

40. The method of claim 39, wherein generating the recommendation further comprises automatically generating the recommendation by a computer program.

41. A system for evaluating information security for an entity, comprising:
means for identifying at least one information security resource related to an information security area of the entity selected from a group of security areas consisting of an organizational environment area, a business commitment area, a policy and standards area, and an information security programs and services area of the entity;
means associated with the identifying means for receiving information about at least one information security characteristic for the identified information security resource;
means communicating with the receiving means for categorizing the information security characteristic according to a pre-defined hierarchy of information security risk levels associated with information security characteristics; and
means associated with the categorizing means for assessing a degree of business risk for the entity based on the categorization of the information security characteristic.

42. The system of claim 41, wherein the identifying means further comprises means for receiving a selection of the identified security information resource.

43. The system of claim 42, wherein in the means for receiving the selection further comprises a computer program.

44. The system of claim 41, wherein the means for receiving the information further comprises a computer program.

45. The system of claim 41, wherein the means for categorizing the information security characteristic further comprises an information security evaluation model grid.

46. The system of claim 41, wherein the means for categorizing the information security characteristic further comprises a computer program.

47. The system of claim 41, wherein the means for assessing the degree of business risk further comprises an information security evaluation model grid.

48. The system of claim 41, wherein the means for assessing the degree of business risk further comprises a computer program.
